**Europäisches Patentamt**

**European Patent Office**

**Office européen des brevets**

(19)

(11) Publication number : **0 277 252 B1**

(12) **EUROPEAN PATENT SPECIFICATION**

(45) Date of publication of patent specification :
25.03.92 Bulletin 92/13

(51) Int. Cl.⁵ : **F02B 53/00**

(21) Application number : **87905286.8**

(22) Date of filing : **11.08.87**

(86) International application number :
**PCT/JP87/00603**

(87) International publication number :
**WO 88/01342 25.02.88 Gazette 88/05**

(54) **curved cylinder engine.**

(30) Priority : **12.08.86 JP 187706/86**

(43) Date of publication of application :
**10.08.88 Bulletin 88/32**

(45) Publication of the grant of the patent :
**25.03.92 Bulletin 92/13**

(84) Designated Contracting States :
**AT BE CH DE FR GB IT LI NL SE**

(56) References cited :
**DE-A- 2 524 671**

(73) Proprietor : **NAGATANI, Shigeo**
**29-1, Nagai Ohimachi, Ohi-gun**
**Fukui-ken 919-21 (JP)**

(72) Inventor : **NAGATANI, Shigeo**
**29-1, Nagai Ohimachi, Ohi-gun**
**Fukui-ken 919-21 (JP)**

(74) Representative : **Prüfer, Lutz H., Dipl.-Phys.**
**Harthauser Strasse 25d**
**W-8000 München 90 (DE)**

Jouve, 18, rue Saint-Denis, 75001 PARIS

## Description

The present invention relates to a motor having a cylinder with a special cross-sectional configuration and a piston received therein, which are arranged so as to enhance the output of an internal combustion engine for activating an automobile or the like and to considerably increase the efficiency thereof. More particularly, the present invention pertains to a structure of a rotor composite engine which employs such cylinder and piston having special cross-sectional configurations, together with an excentric journal and a main journal.

There have heretofore been various types of internal combustion engines for activating automobiles or the like, i.e., the reciprocating piston type, the rotor type, a combination of the piston type and the rotor type in which the former is dominant, and a combination of the rotor type and the piston type in which the former is dominant.

This is described, for example, in "Automobile Maintenance and Repair Techniques, Second-Class Gasoline-Fueled Automobiles" compiled and published by Federation of Japan Automobile Maintenance and Repair Promoting Associations, Corp.

From JP-B2-5928721, Figs. 7 to 9, it is known to provide a motor the cylinder of which has a cylindrical cross-section, the piston therein also having such cross-section, the cylinder axis being curved around a central point, the piston reciprocating along said curved cylinder axis. Transformation of the reciprocating motion of the piston into rotational movement of the crank shaft is accomplished by providing the piston with an extension fixed thereto, said extension being pivotally mounted on a journal, an elongation of said extension being pivotally connected to a connection rod which provides rotational movement to a crank shaft.

In this prior art motor, the power transmission from the piston to the crank shaft achieved by the above-mentioned connection means is not very efficient.

In view of the above-described problems of the prior art, it is an object of the present invention to provide an engine which does not belong to either the conventional rectilinear reciprocation piston type or the conventional rotor type but has a cylinder and a piston as described above.

For enabling the arcwise reciprocating motion of the piston to be more efficiently converted into rotational motion the curved cylinder machine is designed as indicated in the annexed claim, thus enhancing the engine output and amplifying the efficiency thereof to solve the above-described problems.

Fig. 1 shows the basic concept based on the best mode for carrying out the present invention;

Figs. 2(A), 2(B) and 2(C) show the positional relationship between the piston 2 and excentric journal 8 which are shown in the above-described figure illustrating the basic concept;

Fig. 3 shows the power shaft 10 with its excentric journals 8, and the main journal 9.

Figs. 4(a), 4(b) are two views of the connecting rod 4.

Fig. 5 shows the rotor body 5.

Fig. 6 is a perspective view of the rotor, and

Fig. 7 a perspective view showing the essential parts of the assembled engine.

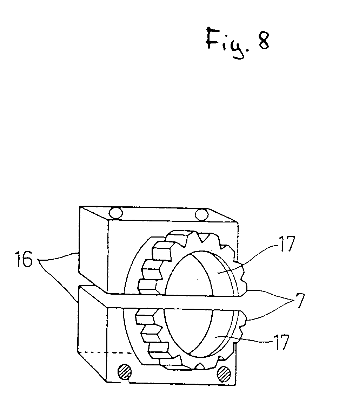

Fig. 8 shows an embodiment of the center year 7 together with a bearing of split type;

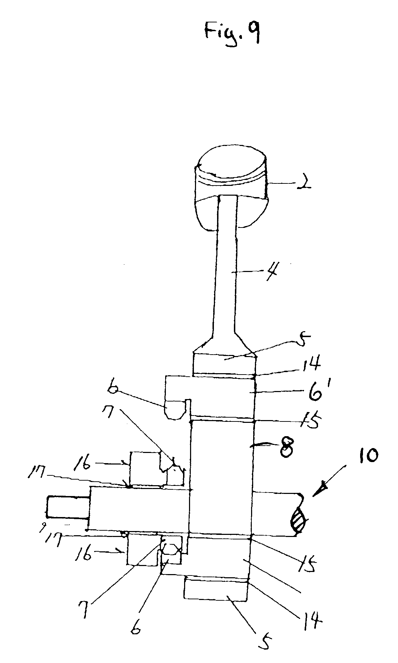

Fig. 9 is a cross sectional view of the device.

The present invention will be described hereinunder in detail with reference to the drawings.

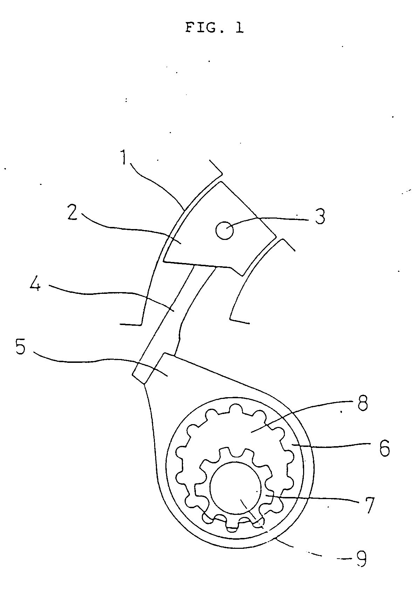

Fig. 1 is a sectional view of one embodiment, showing the basic concept of the present invention.

As shown in Fig. 1, the engine has a structure in which a piston 2 is received in a cylinder block 1 which defines a predetermined curved surface, the piston 2 defining the same curved surface as that of the cylinder block 1. More specifically, the piston performs the engine strokes, that is, the intake, compression, combustion and exhaust strokes, within the cylinder block 1 having the same curved surface as the piston 2. Accordingly, the piston 2 performs arcwise reciprocating motion along these predetermined curved surfaces.

Thus, the arcwise reciprocating motion of the piston 2 is derived and put to practical use as power for an automobile or the like by making use of a rotor gear of a rotor incorporated in a rotor body 5 having a configuration as described later.

Since the above-described piston 2 performs arcwise reciprocating motion, the motion of the piston 2 can be converted into rotational motion more effectively than the motion of a conventional piston 2 which reciprocates rectilinearly.

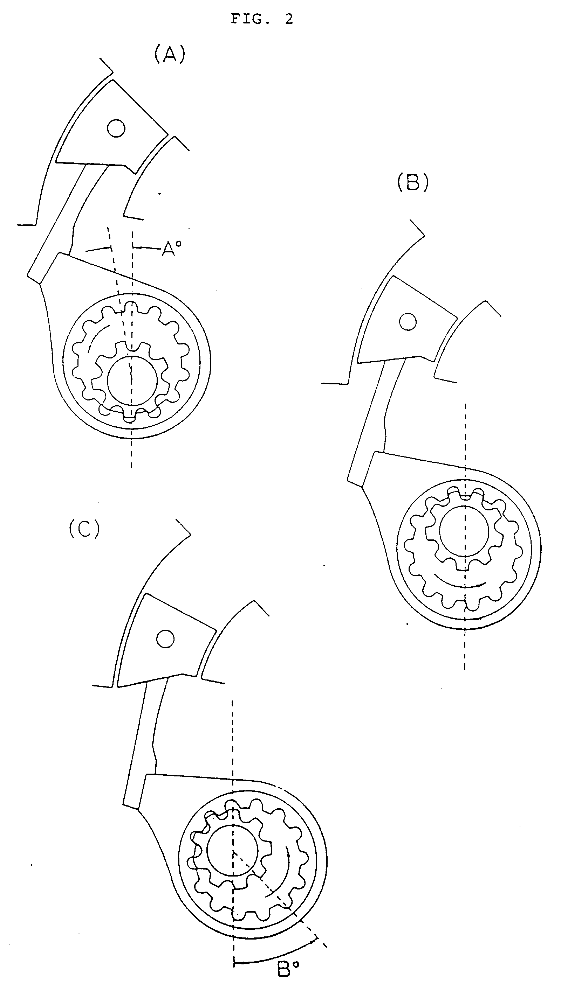

Fig. 2(A) shows the positional relationship between the piston 2 and the excentric journal 8 at the time when the piston 2 is at the top dead center; Fig. 2(B) shows the positional relationship between the piston 2 and the excentric journal 8 at the time when the piston 2 is descending; and Fig. 2(C) shows the positional relationship between the piston 2 and the excentric journal 8 at the time when the piston 2 is at the bottom dead center.

As will be clear from Figs. 2(A), 2(B) and 2(C), when the piston 2 is at the top dead center, the excentric journal 8 is at a rotational position slightly past the topmost position thereof relative to the main journal 9 (i.e., a position A° offset from the topmost position of the excentric journal 8 as shown in Fig. 2(A)); when the piston 2 is descending, the main journal 9 moves counterclockwise through B° from the A° offset position relative to the excentric journal 8; and when the piston 2 is at the bottom dead center, the excentric journal 8 reaches a position which is B° past the bottommost position thereof in the rotational direction relative to the main journal 9, and thereafter, as the piston ascends, the excentric journal 8 moves from the B° position to the A° position.

Accordingly, when the piston 2 descends, the power shaft 10 having the main journal 9 connected thereto rotates more than during the ascending stroke of the piston 2 by an amount corresponding to B°-A°.

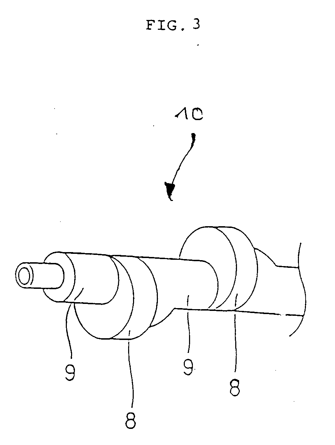

The power shaft shown in Fig. 3 is composed of at least one excentric journal 8 and a main journal 9 and corresponds to the conventional crank shaft.

Fig. 3 shows a power shaft 10 for a two-cylinder arrangement in which two cylinders 1 of the type described above are disposed side by side. Consequently, two excentric journals 8 are provided on the power shaft 10.

It should be noted that an engine employing a cylinder and a piston in accordance with the embodiment of the present invention cannot operate by employing a conventional connecting rod, but it is necessary to form a rotor body having a special configuration. The rotor body for transmitting the arcwise reciprocating motion to the power shaft must be arranged as follows. Since the piston 2 performs arcwise motion, the connecting rod 4 also oscillates sideward to a substantial extent about a piston pin 3 in response to the arcwise motion, and therefore the connecting rod 4 and the rotor body 5 must be such that the motion of the piston 2 is not interferred with. In particular, the above-described rotor body 5 is formed integral with the above-described rotor gear 6.

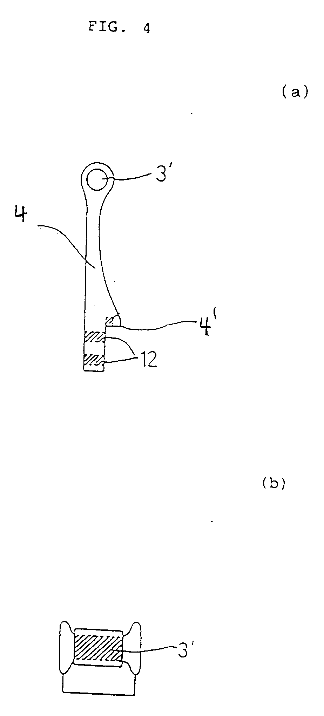

Fig. 4 shows a specific example of the connecting rod 4. Fig. 4(a) shows the connecting rod 4 in a side view; and Fig. 4(b) a detail of the upper part of said rod.

Reference sign 3' denotes the hole for the piston pin 3 shown in Fig. 1. 4' is a projecting portion for receiving the rotor body 5 which is fixed to the connecting rod 4 by means of bolts penetrating bolt holes 12. In Fig. 4(b) the piston pin hole 3' is shown in a top view.

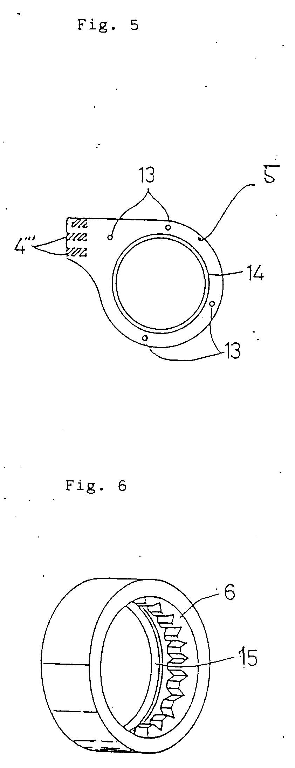

Fig. 5 shows the rotor body 5. In Fig. 5 threaded holes 4''' serve for mounting the rotor body 5 to the connecting rod 4. 13 denote holes for installing thrust washers. 14 is a bearing for rotatably mounting the rotor body to one of the excentric journals 8 shown in Fig. 3.

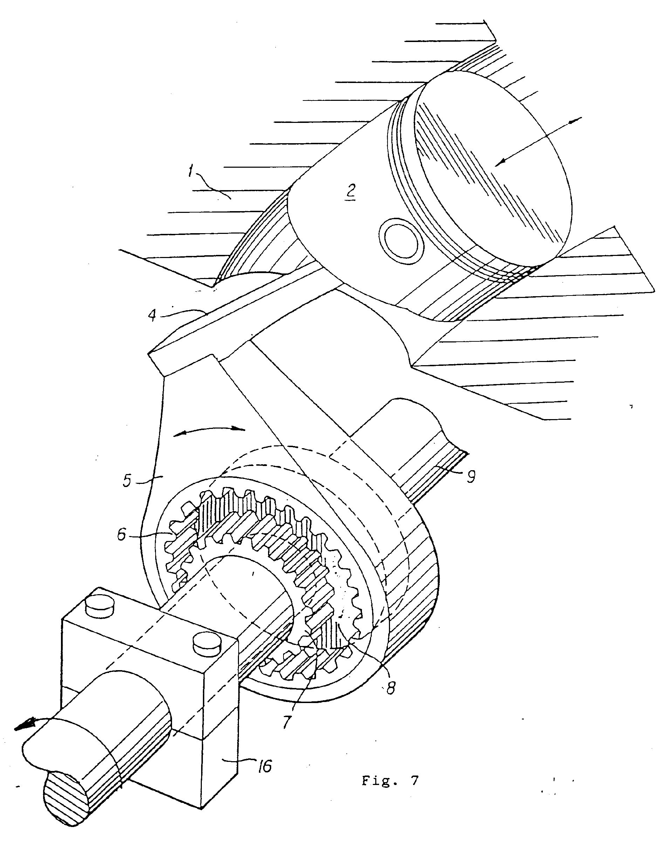

The rotor gear 6 shown in Fig. 6 is provided with a rotor bearing 15 to be mounted on one of the excentric journals 8.

When this means is employed, the descending stroke of the piston 2 can be completed in a longer time than in the case of the ascending stroke. Therefore, of the intake, compression, combustion and exhaust strokes, the compression and exhaust strokes are completed in a relatively short time, whereas the combustion and intake strokes are conducted in a relatively long time. Accordingly, it is possible to prevent leakage due to compression and increase the efficiency in each of the strokes. Thus, it is possible to obtain an engine having a higher horsepower for the same displacement.

In an engine having a cylinder 1 and a piston 2 in accordance with this invention, piston rings and piston grooves which are employed to ensure air tightness between the cylinder block 1 and the piston 2 are formed in such a manner that the piston ring grooves and the spacing between the grooves are relatively narrow at the inner-surface side of the piston and relatively wider at the outer-surface side thereof and the prolongations of the ring grooves at the inner-surface side are coincident with a central point 0 of the cylinder block, i.e. the point of origin of the radii defining the curve of the cylinder block 1 as shown in Figs. 1 and 2, in order to allow movement of the piston rings in contact with the cylinder wall at right angles.

Further, since the cylinder wall has a curved surface, piston ring stoppers may be provided for securing the rings in such a manner that the contact surfaces of the rings are maintained in predetermined positions at all times. In order to smoothen the contact surfaces of the piston rings with the cylinder wall and also to prevent compression leakage, the piston rings are preferably formed such that the taper angle of the piston rings is the smallest at the outer-surface side and is the largest at the inner-surface side.

Since both the cylinder block 1 and the piston 2 define curved surfaces, the inner surface of the piston 2 moves less than the outer surface thereof, and the motion of the connecting rod 4 is correspondingly large. Accordingly, since the motion of the outer surface of the piston 2 is relatively large, the rotation of the rotor from the vertical direction toward the horizontal direction is enhanced.

The rotor is assembled with the rotor body 5, and the rotors gear 6 is meshing with the center gear 7. The number of center gears 7 and that of excentric journals 8 are the same as the number of cylinders. The rotor gears 6 are mounted on the respective excentric journals 8, and the center gears 7 on the respective main journals 9.

The rotor revolves around the excentric journal 8 while rotating around its own axis.

It should be noted that a plate may be secured to the side of the excentric journal 8 by means of bolts received in rotor thrust plate mounting bores 13 so that the rotor is prevented from coming off.

Since the number of main journals 9 is larger than that of excentric journals by one for structural reasons, the main journal may be secured to the thrust main journal 9 by means of a bearing cap equipped with a thrust bearing with no center gear so as to receive force in the axial direction.

The power shaft 10 comprising the journals 8 and 9 is mounted to the cylinder block 1 by means of bearings 16.

As described in the foregoing embodiment, the present invention exhibits its effects in each of the intake, compression, combustion and exhaust strokes for the mixture of a fuel gas and air. More specifically, in the intake stroke, the suction of the fuel-air mixture effected by the piston continues for a relatively long period of time since the rotational distance of the excentric journal is relatively long, and the suction of the fuel-air mixture is therefore effected reliably. In the compression stroke, since the piston ascends quickly through a relatively short distance, compression leakage is minimized and loss of power is eliminated. Next, in the combustion stroke, the rotor body causes the excentric journal to rotate through the rotor, thus rotating the power shaft. Therefore, the horsepower generated from the combustion pressure increases. In addition, since the power shaft is rotated by 180° + α, energy is effectively utilized. Finally, in the exhaust stroke, combustion gas is discharged quickly, and the piston stroke promptly shifts to the intake stroke.

Thus, when the functional effects of the various parts of the present invention are comprehensively observed, these functional effects amplify each other to enhance the engine output, thus amplifying the efficiency thereof.

## Claims

1. A curved cylinder engine comprising:
a cylinder block (1) defining a cylinder having a predetermined curved surface;
a piston (2) received in said cylinder (1) and having a surface curved to correspond to said curved surface of said cylinder, whereby said piston (2) can reciprocate along a curved path in said cylinder;
a power shaft (10) having main journals (9), by means of which it is rotatably mounted in fixed relation to said cylinder block (1), and also having eccentric journals (8) onto which the motion from said piston is transmitted.
a connecting rod (4) connected to said piston (2); and
means between said connecting rod (4) and said power shaft eccentric journal (8) for converting the reciprocating movements of said piston (2) into rotation of said power shaft (10),
characterized in that said converting means comprises:
a rotor body (5) fixidly connected to said connecting rod, said rotor body having a first internal bearing surface (14) within which rotates a rotor (6'), said rotor having a second internal bearing surface (15) within which rotates said eccentric journal (8) of the power shaft (10), said rotor also having mounted thereon, co-axial with and adjacent to said eccentric journal (8), a rotor gear (6), said rotor gear (6) having teeth which mesh with the teeth of a centre gear (7), said centre gear (7) being fixed in relation to the cylinder block adjacent to a main journal bearing (16) of the power shaft.

2. The curved cylinder engine of claim 1, wherein the rotor gear (6) is provided with internal teeth and the center gear (7) is provided with external teeth.

3. The curved cylinder engine of claim 2, wherein the center görar (7) and the bearing (16) of the main journal are formed in one piece.

4. The curved cylinder engine of claim 3, wherein the main journal bearing (16) is of the split type.

5. The curved cylinder engine of claim 1, wherein thrustwashers are provided on the rotor body (5) to secure the rotor (6') within said rotor body (5).

6. The curved cylinder engine of claim 1, wherein the connecting rod (4) and the rotor body (5) are connected by bolts.

## Patentansprüche

1. Motor mit gekrümmtem Zylinder mit:
einem einen Zylinder mit einer vorbestimmten gekrümmten Oberfläche definierenden Zylinderblock (1);
einem in dem Zylinder (1) aufgenommenen Kolben (2) mit einer der gekrümmten Oberfläche des Zylinders entsprechenden gekrümmten Oberfläche, wodurch sich der Kolben (2) entlang eines gekrümmten Weges in dem Zylinder hin- und herbewegen kann;
einer Kurbelwelle (10) mit Hauptzapfen (9), mit deren Hilfe diese drehbar in fester Beziehung zu dem Zylinderblock (1) gelagert ist, und mit exzentrischen Nocken (8), auf die die Bewegung von dem Kolben übertragen wird;
einer mit dem Kolben (2) verbundenen Kolbenstange (4) und Mittel zwischen der Kolbenstange (4) und dem exzentrischen Kraftwellennocken (8) zum Umwandeln der Hin- und Herbewegung des Kolbens (2) in Rotation der Kurbelwelle (10);
dadurch gekennzeichnet, daß das Umwandelmittel einen fest mit der Kolbenstange (4) verbundenen Rotorkörper (5) aufweist, wobei der Rotorkörper eine erste innere Lageroberfläche (14) aufweist, in der sich ein Rotor (6') dreht, der Rotor eine zweite innere Lageroberfläche (15) aufweist, in der sich der exzentrische Nocken (8) der Kurbelwelle (10) dreht, auf dem Rotor koaxial mit und benachbart zu dem exzentrischen Nocken (8) ein Rotorzahnrad (6) angebracht ist, das Rotorzahnrad (6) Zähne aufweist, die in die Zähne eines Zentralzahnrades (7) eingreifen, das Zentralzahnrad (7) in Beziehung zu dem Zylinderblock benachbart zu einem Hauptzapfenlager (16) der Kurbelwelle befestigt ist.

2. Motor mit gekrümmtem Zylinder nach Anspruch 1, bei dem das Rotorzahnrad (6) mit inneren Zähnen versehen ist und das Zentralzahnrad (7) mit externen Zähnen versehen ist.

3. Motor mit gekrümmtem Zylinder nach Anspruch 2, bei dem das Zentralzahnrad (7) und das Lager (16) des Hauptzapfens in einem Stück gebildet sind.

4. Motor mit gekrümmtem Zylinder nach Anspruch 3, bei dem das Hauptzapfenlager (16) geteilt ist.

5. Motor mit gekrümmtem Zylinder nach Anspruch 1, bei dem Druckscheiben auf dem Rotorkörper (5) zum Sichern des Rotors (6') innerhalb des Rotorkörpers (5) vorgesehen sind.

6. Motor mit gekrümmtem Zylinder nach Anspruch 1, bei dem die Kolbenstange (4) und der Rotorkörper (5) durch Bolzen verbunden sind.

## Revendications

1. Moteur à cylindre courbe comprenant :

un bloc-cylindre (1) définissant un cylindre possédant une surface courbe prédéterminée ;

un piston (2) reçu dans ledit bloc-cylindre (1) et possédant une surface courbe de façon à correspondre à ladite surface courbe dudit cylindre, ledit piston (2) pouvant effectuer un mouvement alternatif le long d'un trajet courbe dans ledit cylindre ;

un vilebrequin (10) possédant des tourillons principaux (9), au moyen desquels il est monté avec possibilité de rotation en relation fixe avec ledit bloc-cylindre (1), et possédant également des manetons excentriques (8) sur lesquels le mouvement dudit piston est transmis ;

une bielle (4) reliée audit piston (2) ; et

des moyens entre ladite bielle (4) et ledit maneton excentrique (8) du vilebrequin pour convertir les mouvements alternatifs dudit piston (2) en une rotation dudit vilebrequin (10),

caractérisé en ce que ledit moyen de conversion comprend un corps de rotor (5) relié de manière fixe à ladite bielle, ledit corps de rotor ayant une première surface portante interne (14) à l'intérieur de laquelle un rotor (6') effectue une rotation, ledit rotor ayant une seconde surface portante interne (15) à l'intérieur de laquelle ledit maneton excentrique (8) du vilebrequin (10) effectue une rotation, ledit rotor portant aussi monté sur lui, de manière coaxiale et adjacente audit maneton excentrique (8), une roue de rotor (6) possédant des dents qui s'engrènent avec les dents d'une roue centrale (7), celle-ci étant fixe par rapport au bloc-cylindre, en position adjacente à un palier principal (16) du vilebrequin.

2. Moteur à cylindre courbe selon la revendication 1, caractérisé en ce que la roue de rotor (6) est pourvue de dents internes et en ce que la roue centrale (7) est pourvue de dents externes.

3. Moteur à cylindre courbe selon la revendication 2, caractérisé en ce que la roue centrale (7) et le palier de tourillon principal (16) sont formés d'un seul tenant.

4. Moteur à cylindre courbe selon la revendication 3, caractérisé en ce que le palier de tourillon principal (16) est du type en deux pièces.

5. Moteur à cylindre courbe selon la revendication 1, caractérisé en ce que des disques de butée sont prévus sur le corps du rotor (5) afin de maintenir le rotor (6') à l'intérieur de celui-ci.

6. Moteur à cylindre courbe selon la revendication 1, caractérisé en ce que la bielle (4) et le corps de rotor (5) sont reliés par des boulons.

FIG. 1

FIG. 2

(A)

—A°

(B)

(C)

B°

FIG. 3

FIG. 4

(a)

3'

4

4'

12

(b)

3'

Fig. 5

13    5

4'''

14

13

Fig. 6

6

15

Fig. 7

Fig. 8

Fig. 9